# EUROPEAN PATENT APPLICATION

(11) **EP 1 505 836 A1**
(43) Date of publication of application: **09.02.2005**
(21) Application number: 04254684.6
(22) Date of filing: 04.08.2004
(51) Int. Cl.: H04N 7/24, H04N 7/173

(54) **Apparatus and method for encoding/decoding broadcasted or recorded contents**

(30) Priority: 05.08.2003 KR 2003054218
(71) Applicant: Samsung Electronics Co., Ltd., Suwon-si, Gyeonggi-do (KR)
(72) Inventor: Seo, Ju-hee, Yeongtong-gu Suwon-si Gyeonggi-do (KR)
(74) Representative: Robinson, Ian Michael

(57) **Abstract**

Provided are an apparatus and a method of encoding/decoding broadcast contents and spare contents. The method of decoding broadcast contents and spare contents includes determining whether a broadcast contents stream (101) that is presently broadcasted can be decoded; and performing a decoding operation on the broadcast contents stream (101) or previously stored spare contents stream (102) selectively based on a result of determination in the determining step. The spare contents are reproduced when a receive failure happens, thus reducing an uncomfortable feeling of a user caused by watching inferior images and hearing inferior sounds.

## Description

The present invention relates to an apparatus and a method for encoding/decoding broadcast contents.

Recently, attention has been given to digital multimedia broadcasting (DMB), which provides a user, who is moving in a vehicle or on foot, with multimedia services such as various video, audio, and data services. The DMB sends broadcasting signals considering that the user is in a moving condition. However, receive failure generally happens when the user encounters an artificial obstacle such as a building, a tunnel, or an overpass and a natural obstacle such as a tree, or a hill. Due to the receive failures, the user watches partially or totally broken images, or the sound may be temporarily stopped. This may cause the user to be uncomfortable. Especially, if the receive failure status lasts long, the user may attempt to adjust a DMB receiver, thereby increasing inconvenience and danger of accident.

According to the present invention there is provided an apparatus and method as set forth in the appended claims. Preferred features of the invention will be apparent from the dependent claims, and the description which follows.

The present invention provides an apparatus and a method of playing spare contents including advertisements when a receive failure happens, so as to reduce uncomfortable feeling of a user caused by inferior images and sounds.

According to an aspect of the present invention, there is provided a method of decoding broadcasting/spare contents, the method including the operations of determining whether a broadcast contents stream that is presently broadcasted can be decoded, and performing a decoding operation of the broadcast contents stream or previously stored spare contents stream selectively based on a result of determination in the determining step.

According to another aspect of the present invention, there is provided an apparatus for decoding broadcasting/spare contents, the apparatus including a decoding director directing a decoding operation of a broadcast contents stream or a spare contents stream that is stored in advance according to whether the broadcast contents stream that is broadcasted presently can be decoded or not, and a spare contents stream decoding unit for decoding the spare contents stream, if the decoding operation of the spare contents stream is directed by the decoding director.

According to still another aspect of the present invention, there is provided a method of decoding broadcast/spare contents, the method including the operations of generating a broadcast contents stream by decoding broadcast contents, generating a spare contents stream by decoding spare contents that are reproduced only when the broadcast contents stream cannot be decoded, and generating a transport stream including the broadcast contents stream and the spare contents stream.

According to yet still another aspect of the present invention, there is provided a computer readable recording medium having embodied thereon a computer program for the method of decoding broadcast/spare contents.

According to yet still another aspect of the present invention, there is provided a computer readable recording medium having embodied thereon a computer program for the method of decoding broadcast/spare contents.

The above and other features and advantages of the present invention will become more apparent by describing in detail exemplary embodiments thereof with reference to the attached drawings in which:
Figure 1 is a block diagram of an apparatus for encoding broadcasting/spare contents according to the present invention;
Figure 2 illustrates a format of a transport stream packet according to a motion picture experts group (MPEG) standard;
Figure 3 is a view of an example of a program ID (PID) allocation table including broadcast contents and spare contents of Korean broadcasting companies;
Figure 4 is a view of an example of a transport stream according to the PID allocation table shown in Figure 3;
Figure 5 is a view of a format of a program specific information (PSI) according to the MPEG standard;
Figure 6 is a block diagram of an apparatus for decoding broadcast/spare contents according to the present invention;
Figure 7 is a block diagram of a method of encoding broadcast/spare contents according to the present invention; and
Figure 8 is a flow chart of a method of decoding broadcast/spare contents according to the present invention.

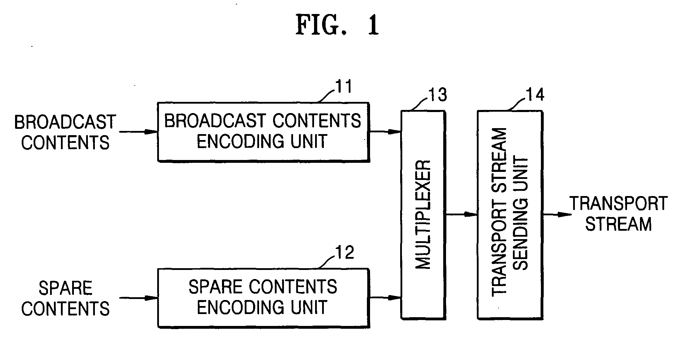

Figure 1 is a block diagram of an apparatus for encoding broadcast/spare contents according to an embodiment of the present invention.

Referring to Figure 1, the apparatus for encoding broadcast/spare contents includes a broadcast contents encoding unit 11, a spare contents encoding unit 12, a multiplexer 13, and a transport stream sending unit 14.

The broadcast contents encoding unit 11 encodes broadcast contents to generate a broadcast contents stream. Here, the broadcast contents are contents that will be broadcasted by a broadcasting company, and include all kinds of video contents, audio contents, and data contents. If the broadcast content is compressed in a motion picture experts group (MPEG) form, the content is encoded after passing through processes of discrete cosine transform (DCT) and quantization. After the encoding process, the broadcast contents such as the video contents, audio contents, and the data contents are converted into compressed bit streams.

The spare contents encoding unit 12 encodes the spare contents, which are reproduced only when the broadcast contents stream, which is encoded in the broadcast contents encoding unit 11, can not be decoded, to generate a spare contents stream. The spare contents are encoded in the same way as that of the broadcast contents. However, the spare contents are not independent contents like the broadcast contents, but dependent contents, which are decoded and played only when the present broadcast contents stream can not be decoded and played due to a receive failure. Therefore, if the receiving status of the broadcast contents is good, the spare contents may be discarded without being played. Thus, the spare contents generally includes advertisement contents, electronic program guide contents, or broadcasting company logo contents, which are not essentially provided to a user, and lengths of the contents are short since the receive failure generally does not last long.

The multiplexer 13 generates a transport stream including the broadcast contents stream, which is generated by the broadcast contents encoding unit 11, and the spare contents stream, which is generated by the spare contents encoding unit 12. The broadcast contents stream generated by the broadcast contents encoding unit 11 and the spare contents stream generated by the spare contents encoding unit 12 are divided into a plurality of transport stream packets having appropriate sizes.

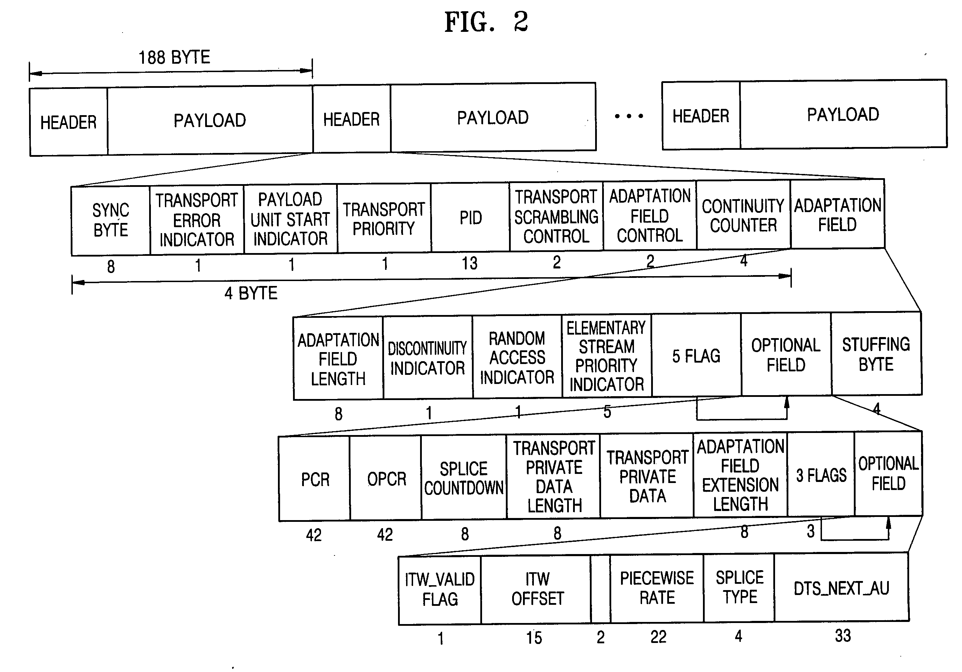

Figure 2 is a view of a format of the transport stream packet according to the MPEG standard.

Referring to Figure 2, a length of a transport stream packet is 188 bytes according to the MPEG standard, and the transport stream packet includes a header and a payload. The header carries information about the packet, and the payload includes a part of the broadcast contents stream or a part of the spare contents stream.

The transport stream sending unit 14 transmits the transport stream generated by the multiplexer 13. That is, the transport stream sending unit 14 transmits the transport stream including the transport stream packets shown in Figure 2. In the digital multimedia broadcasting environment, the transport stream is transmitted wirelessly for the users in a moving condition.

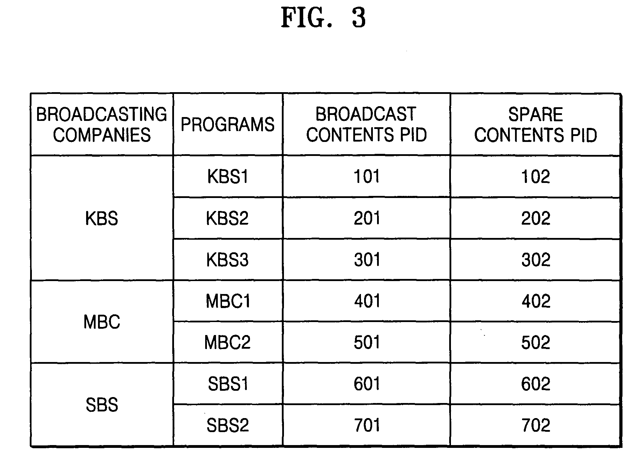

Figure 3 is a view of an example of program ID (PID) allocation table including the broadcast contents and the spare contents of Korean broadcasting companies.

Referring to Figure 3, PIDs 101, 201, and 301 are respectively allocated to the broadcast contents of programs KBS1, KBS2, and KBS3 of the Korean broadcasting system (KBS), and PIDs 102, 202, and 302 are allocated to the spare contents of the programs KBS1, KBS2, and KBS3. In addition, the broadcast contents and the spare contents are in relations of one-to-one correspondence. Referring to Figure 2, a PID field is included in the header of the transport stream packet, and the PID value is recorded on the PID field. The PID is a value for identifying the packet, and same programs have same PID values. In a decoding process, the packets having same PID values are detected and combined to obtain the broadcast contents stream or the spare contents stream of undivided states. This process is referred to as a demultiplexing process.

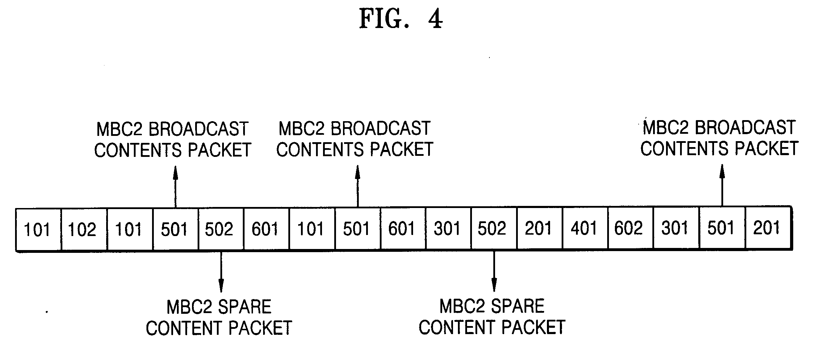

Figure 4 is a view of an example of the transport stream according to the PID allocation table shown in Figure 3.

Referring to Figure 4, each of the transport stream packets is represented by the PID value. As shown therein, the transport stream includes various mixed packets. In order to restore the broadcast contents of program MBC2, packets having PID value of 501 are detected and combined, and then decoded. In order to restore the spare contents of program MBC2, packets having PID value of 502 are detected and combined, and then decoded.

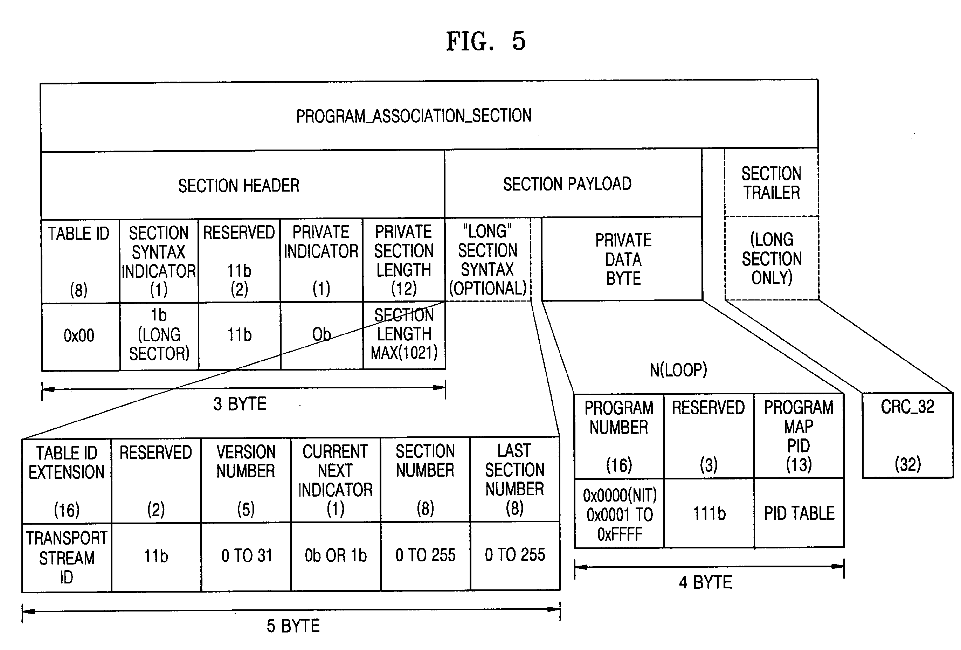

Figure 5 is a view of a format of a program specific information (PSI) according to the MPEG standard.

According to the MPEG standard, the PID of the transport stream packets should be identified in order to encode and decode the transport stream. In addition to the PID, parameter information or link information of the bit stream recorded on the payload of the transport stream packet is identified. The information is recorded in the PSI format shown in Figure 5, and the PSI is transmitted by a packet having the PID value of 0.

If the broadcasting company wants to change the advertisement due to a reason such as changed sponsorship, the spare contents encoding unit 12 substitutes the previous spare contents with new spare contents, and encodes the updated spare contents. Referring to Figure 5, there are a version number field and a current next indicator field, and update of the contents can be represented by those fields. The version number increases whenever the PSI is updated, and the current next indicator increases for representing whether the new version is valid or the old version is valid when the new version and the old version are transmitted simultaneously.

If a receive failure happens during playback of a certain program, an advertisement of the sponsor of the program is generally played. The spare contents encoding unit 12 encodes the spare contents corresponding to the broadcast contents encoded in the broadcast contents encoding unit 11, that is, the advertisement contents of the sponsor sponsoring the broadcast contents. The correspondence can be represented by making some parts of the PIDs the same as shown in Figure 3. For example, since the PID of the broadcast contents of program KBS1 is 101 and the PID of the spare contents of program KBS1 is 102, first and second places are used to identify the program and third places of the PID values are used to identify the broadcast contents or the spare contents.

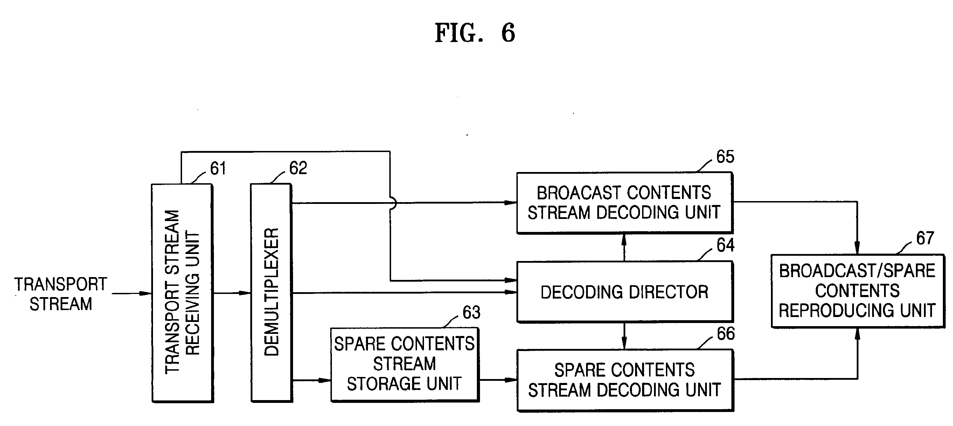

Figure 6 is a block diagram of an apparatus for decoding broadcasting/spare contents according to an embodiment of the present invention.

Referring to Figure 6, the broadcasting/spare contents decoding apparatus includes a transport stream receiving unit 61, a demultiplexer 62, a spare contents stream storage unit 63, a decoding director 64, a broadcast contents stream decoding unit 65, a spare contents stream decoding unit 66, and a broadcast/spare contents playback unit 67.

The transport stream receiving unit 61 receives the transport stream including the broadcast contents stream and the spare contents stream. That is, the transport stream receiving unit 61 receives the transport stream including the transport stream packets shown in Figure 2. In the digital multimedia broadcasting environment, the transport stream is received wirelessly through a portable terminal of the user. Here, the spare contents are generally the advertisement contents, the electronic program guide contents, or the broadcasting company logo contents.

The demultiplexer 62 detects the broadcast contents stream and the spare contents steam from the transport stream received by the transport stream receiving unit 61. Referring to Figure 3, the broadcast contents stream and the spare contents stream are detected based on the PIDs of the packets. For example, in order to detect the broadcast contents stream of program MBC2, the packets having the PID value of 501 are detected and combined. In order to detect the spare contents stream of program MBC2, the packets having the PID value of 502 are detected and combined.

The spare contents stream storage unit 63 stores the spare contents stream detected by the demultiplexer 62. When the receive failure of the broadcast contents happens, the stored spare contents are played during the receive failure. In an exemplary embodiment, the spare contents stream is stored in a non-volatile memory so that the stored contents can be reserved without regarding turn-on/turn-off states of the receiving terminal. In a case where the spare contents stream detected by the demultiplexer 62 is a new spare contents stream updating the spare contents stream stored in the spare contents stream storage unit 63, the spare contents stream storage unit 63 deletes the stored spare contents stream and stores the detected spare contents stream. As shown in Figure 5, the new spare contents stream is decided with reference to the value of version number field and the value of current next indicator field.

The decoding director 64 directs to decode the broadcast contents stream if it is decided that the broadcast contents stream detected by the demultiplexer 62 can be decoded. In addition, if it is decided that the broadcast contents stream detected by the demultiplexer cannot be decoded, the decoding director 64 directs to decode the spare contents stream. Here, whether the broadcast contents stream can be decoded or not can be decided through an electric field strength or a loss degree of the transport stream. That is, if there is the receive failure, the electric field strength of the received transport stream becomes weak, or loss of the broadcast contents stream included in the transport stream increases.

The decoding director 64 decides that the broadcast contents stream included in the received transport stream can be decoded, in a case where the electric field strength of the transport stream received by the transport stream receiving unit 61 is a certain threshold or more. In addition, in a case where the electric field strength of the transport stream received by the transport stream receiving unit 61 is smaller than the threshold, the decoding director 64 decides that the broadcast contents stream included in the received transport stream cannot be decoded. For performing the decision, an electric field measuring device can be used.

Also, in a case where the degree of lost broadcast contents stream detected by the demultiplexer 62 is a certain threshold value or more, the decoding director 64 decided that the broadcast contents stream included in the received transport stream can be decoded. In addition, if the loss degree of the broadcast contents stream detected by the demultiplexer 62 is less than the threshold value, the decoding director 64 decides that the broadcast contents stream included in the received transport stream cannot be decoded. The decision process is performed using a value recorded on a discontinuity indicator field of the transport stream packet shown in Figure 2.

The broadcast contents stream decoding unit 65 decodes the broadcast contents stream detected by the demultiplexer 62 to recover the broadcast contents, in a case where the decoding of the broadcast contents stream is directed by the decoding director 64, that is, in a case where the broadcast contents stream included in the received transport stream can be decoded. The decoding process is made by performing the encoding process inversely, that is, through inverse-quantization or inverse DCT (IDCT) process.

The spare contents stream decoding unit 66 decodes the spare contents stream stored in the spare contents stream storage unit 63 to restore the spare contents, in a case where the decoding of the spare contents stream is directed by the decoding director 64, that is, in a case where the broadcast contents stream included in the received transport stream cannot be decoded. The spare contents stream decoding unit 66 decodes the spare contents stream, which is stored in the spare contents stream storage unit 63, corresponding to the broadcast contents stream that is decided not to be decoded by the broadcast contents stream decoding unit 65. As shown in Figure 3, if the receive failure of a certain broadcast contents stream happens, the spare contents decoded from the spare contents stream, which is recorded on the packet having the PID value of same first and second places as those of the PID value on the packet, on which the broadcast contents stream is recorded.

The broadcasting/spare content reproducing unit 67 reproduces the broadcast contents detected by the broadcast contents stream decoding unit 65, or the spare contents decoded by the spare contents stream decoding unit 66. That is, the broadcasting/spare contents reproducing unit 67 reproduces the broadcast contents when the broadcast contents are received smoothly, and reproduces the spare contents when the receive failure of the broadcast contents happens. The video contents are played through a display panel, and the audio contents are played through a speaker. Generally, according to the MPEG standard, the video contents and the audio contents are played simultaneously based on a program clock reference (PCR), decoding time stamp (DTS), and presentation time stamp (PTS).

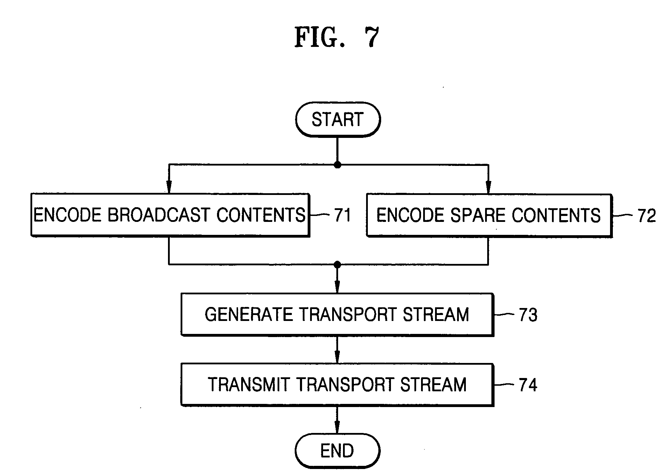

Figure 7 is a block diagram of a method of encoding broadcasting/spare contents according to an embodiment of the present invention.

Referring to Figure 7, the method of encoding broadcasting/spare contents generates the broadcast contents stream by encoding the broadcast contents (step 71), generates spare contents stream by encoding the spare contents, which are played when the encoded broadcast contents stream cannot be decoded (step 72). Here, the encoded spare contents are updated by new spare contents, and the new spare contents are encoded. Also, the spare contents corresponding to the encoded broadcast contents are encoded. In addition, the transport stream including the broadcast contents stream and the spare contents stream is generated (step 73). In addition, the generated transport stream is transmitted (step 74). Here, the spare contents are generally the advertisement contents, electronic program guide contents, or broadcasting company logo contents.

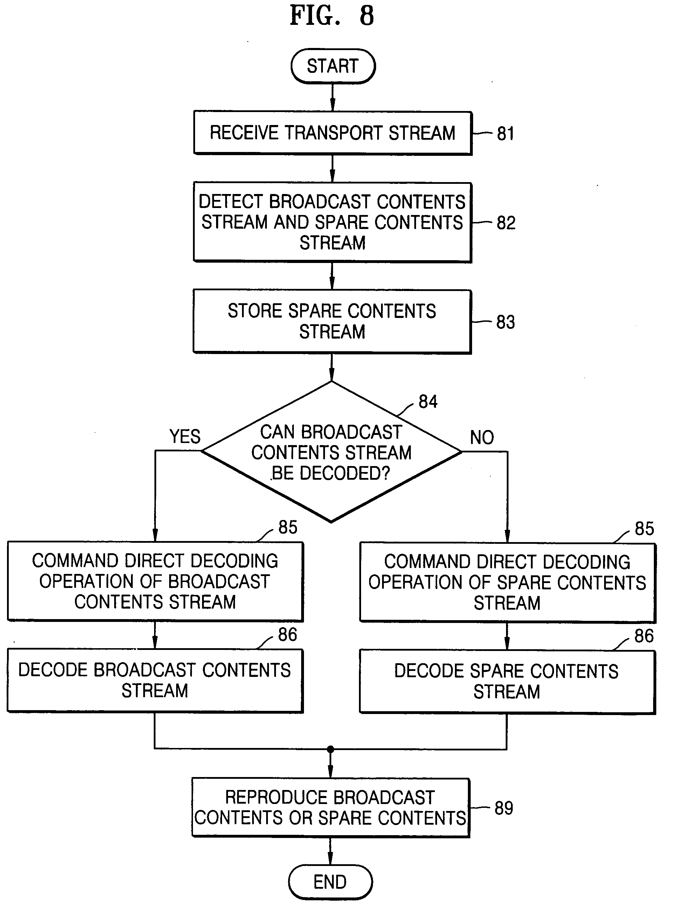

Figure 8 is a flow chart of a method of decoding broadcasting/spare contents according to an embodiment of the present invention.

Referring to Figure 8, according to the method of decoding the broadcasting/spare contents, the transport stream including the broadcast contents stream and the spare contents stream is received (step 81). The broadcast contents stream and the spare contents stream are detected from the received transport stream (step 82). In addition, the detected spare contents stream is stored in a storage unit (step 83). Here, if the detected spare contents stream is a new spare contents stream updating the stored spare contents stream, the stored spare contents stream is deleted and the new spare contents stream is stored.

When it is decided that the detected broadcast contents stream can be decoded (step 84), the decoding of the broadcast contents stream is directed by a decoding director. When the decoding of the broadcast contents stream is directed, the detected broadcast contents stream is decoded to restore the broadcast contents (step 86). If it is decided that the detected broadcast contents stream cannot be decoded (step 84), decoding of the spare contents stream is directed by the decoding director (step 87). In addition, when the decoding of the spare contents stream is directed, the stored spare contents stream is decoded to restore the spare contents (step 88). Here, the stored spare contents stream, which is corresponded to the broadcast contents stream decided not to be decoded, is decoded. In addition, the restored broadcast contents, or restored spare contents are played (step 89). Here, the spare contents are generally advertisement contents, electronic program guide contents, or broadcasting company logo contents.

In step 84, if the electric field strength of the received transport stream is a certain threshold value or more, it is decided that the broadcast contents stream included in the received transport stream can be decoded. If the electric field strength of the received transport stream is smaller than the threshold value, it is decided that the broadcast contents stream included in the transport stream cannot be decoded. Also, if the loss degree of the detected broadcast contents stream is a certain threshold value or more, it is decided that the broadcast contents stream included in the received transport stream can be decoded. If the loss degree of the broadcast contents stream is less than the threshold value, it is decided that the broadcasting stream included in the received transport stream cannot be decoded.

On the other hand, the method of the present invention can be performed through a program, which can be performed in a computer, and can be realized in a general-purpose digital computer, which operates the program using a recording medium readable by the computer.

The computer-readable recording medium includes a storage medium such as a magnetic storing medium (for example, a ROM, a floppy disk, and a hard disk), an optical read-out medium (for example, a CD-ROM, DVD), and a carrier wave (for example, transmission through internet).

According to the present invention, the spare contents including such the advertisement contents are played, in a case where the receive failure is generated while the digital multimedia broadcasting is being received, to reduce the uncomfortable feeling of the user since the user should watch/listen the image and sound having inferior receiving quality. Also, inconvenience or danger, which is caused since the user controls the digital multimedia receiver when the receive failure lasts long, can be removed. Furthermore, the present invention suggests new advertisement form in the digital multimedia broadcasting receiver is suggested.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of decoding broadcast contents and spare contents, the method comprising:
determining whether a broadcast contents stream (101) that is presently broadcasted can be decoded; and
performing a decoding operation of the broadcast contents stream (101) or previously stored spare contents stream (102) selectively based on a result of determination in the determining step.

2. The method of claim 1, wherein the spare content is one of advertisement content, electronic program guide content, and broadcasting company logo content.

3. The method of claim 1 or 2, wherein in the performing of the decoding operation, the broadcast contents stream (101) is decoded if it is determined that the broadcast contents stream (101) can be decoded, and the spare contents stream (102) is decoded if it is determined that the broadcast contents stream (101) cannot be decoded.

4. The method of any preceding claim, wherein in the determining whether the broadcast contents stream (101) can be decoded, it is determined that the broadcast contents stream (101) cannot be decoded in a case where an electric field strength of a transport stream including the broadcast contents stream (101) is less than a predetermined threshold value.

5. The method of any preceding claim, wherein in the determining whether the broadcast contents stream (101) can be decoded, it is determined that the broadcast contents stream (101) that is included in a received transport stream can be decoded in a case where a loss degree of the broadcast contents stream (101) is a predetermined threshold value or more.

6. The method of any preceding claim, wherein the performing of the decoding operation includes decoding the spare contents stream (102) corresponding to the broadcast contents stream (101) that cannot be decoded.

7. An apparatus for decoding broadcast contents and spare contents, the apparatus comprising:
a decoding director (64) directing a decoding operation of a broadcast contents stream (101) or a spare contents stream (102) that is stored in advance according to whether the broadcast contents stream (101) that is broadcasted presently can be decoded or not; and
a spare contents stream decoding unit (66) for decoding the spare contents stream (102), if the decoding operation of the spare contents stream (102) is directed by the decoding director (64).

8. The apparatus of claim 7, wherein the spare contents comprise one of advertisement content, electronic program guide content, and broadcasting company logo content.

9. The apparatus of claim 7 or 8, wherein the decoding director (64) directs a decoding operation for the broadcast contents stream (101) if it is determined that the broadcast contents stream (101) can be decoded, and directs a decoding operation for the spare contents stream (102) if it is determined that the broadcast contents stream (101) cannot be decoded.

10. The apparatus of claim 7, 8 or 9, further comprising a broadcast contents stream decoding unit (65) for decoding the broadcast contents stream (101) if the decoding operation of the broadcast contents stream (101) is directed by the decoding director (64).

11. The apparatus of claim 7, 8, 9 or 10, wherein if an electric field strength of a transport stream including the broadcast contents stream (101) is less than a predetermined threshold value, it is determined that the broadcast contents stream (101) cannot be decoded.

12. The apparatus of any of claims 7 to 11, wherein if a loss degree of the broadcast contents stream (101) is a predetermined threshold value or more, it is determined that the broadcast contents stream (101) that is included in a received transport stream can be decoded.

13. The apparatus of any of claims 7 to 12, wherein the spare contents stream decoding unit (66) decodes the spare contents stream (102) corresponding to the broadcast contents stream (101) that cannot be decoded.

14. A method of decoding broadcast contents and spare contents, the method comprising:
generating a broadcast contents stream (101) by decoding broadcast contents;
generating a spare contents stream (102) by decoding spare contents that are reproduced only when the broadcast contents stream (101) cannot be decoded; and
generating a transport stream including the broadcast contents stream (101) and the spare contents stream (102).

15. The method of claim 14, wherein the spare contents comprise one of advertisement content, electronic program guide content, and broadcasting company logo content.

16. The method of claim 14 or 15, wherein the generating of the spare contents stream (102) is performed by updating new spare contents, and decoding the updated spare contents.

17. The method of claim 14, 15 or 16, wherein the generating of the spare contents stream (102) is performed by decoding the spare contents corresponding to the broadcast contents.

18. A computer readable recording medium having embodied thereon a computer program for a method of decoding broadcast contents and spare contents, the method comprising:
determining whether a broadcast contents stream (101) that is presently broadcasted can be decoded; and
performing a decoding operation of the broadcast contents stream (101) or previously stored spare contents stream (102) selectively based on a result of determination in the determining step.

19. A computer readable recording medium having embodied thereon a computer program for a method of decoding broadcast contents and spare contents, the method comprising:
generating a broadcast contents stream (101) by decoding broadcast contents;
generating a spare contents stream (102) by decoding spare contents that are reproduced only when the broadcast contents stream (101) cannot be decoded; and
generating a transport stream including the broadcast contents stream (101) and the spare contents stream (102).
